# EUROPÄISCHE PATENTANMELDUNG

(11) **EP 2 728 275 A1**
(43) Veröffentlichungstag der Anmeldung: **07.05.2014**
(21) Anmeldenummer: 12191377.6
(22) Anmeldetag: 06.11.2012
(51) Int. Cl.: F24J 2/07, F24J 2/46, F24J 2/51

(54) **Vorrichtung zur Wärmeerzeugung aus Sonnenstrahlung, thermischer Isolator dafür und Sonnenwärmekraftwerk damit**

(71) Anmelder: ABB Technology AG, 8050 Zürich (CH)
(72) Erfinder: Schuler, Gabriel, 8934 Knonau (CH); Bühler, Tilo, 5430 Wettingen (CH); Z'Graggen, Andreas, 8004 Zürich (CH)
(74) Vertreter: ABB Patent Attorneys

(57) **Zusammenfassung**

Gegenstand der Erfindung ist es, dass eine Vorrichtung zur Wärmeerzeugung aus Sonnenstrahlung für ein Sonnenwärmekraftwerk einen Solarabsorber (2) und einen thermischen Isolator (5) aufweist. Der thermische Isolator (5) ist bewegbar zwischen einer ersten Position, in welcher ersten Position der thermische Isolator (5) eine Absorptionsfläche (21) des Solarabsorbers (2) zur Absorption von Sonnenstrahlung freigibt, und einer zweiten Position, in welcher zweiten Position der thermische Isolator (5) die Absorptionsfläche (21) des Solarabsorbers (2) abdeckt.

## Beschreibung

### TECHNISCHES GEBIET

Die vorliegende Erfindung bezieht sich auf das Gebiet von Sonnenwärmekraftwerken. Sie betrifft eine Vorrichtung zur Wärmeerzeugung aus Sonnenstrahlung für ein Sonnenwärmekraftwerk. Die Vorrichtung weist einen Solarabsorber und einen thermischen Isolator auf.

### STAND DER TECHNIK

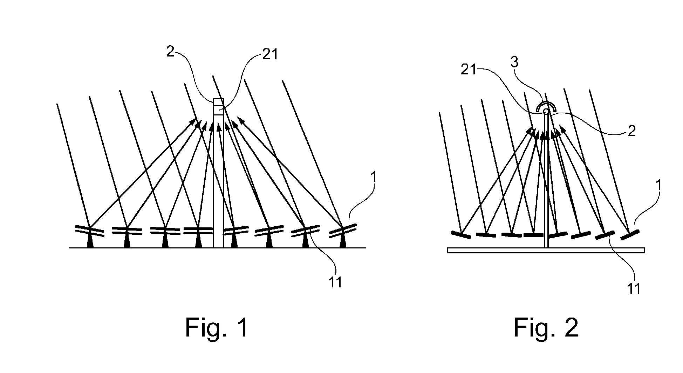

In einem Sonnenwärmekraftwerk wird die Sonnenstrahlung durch Solarkollektoren auf Solarabsorber fokussiert. Die Solarabsorber werden durch die Sonnenstrahlung erwärmt. Fig. 1 zeigt eine Seitenansicht eines Solarturmkraftwerks 1 mit einem turmförmigen Solarabsorber 2. Mehrere im Raum verteilte Spiegelelemente 11 (Heliostaten) sind so ausgerichtet, dass sie einfallende Sonnenstrahlung auf eine kreisförmige am oberen Ende des Solarturms angeordnete Absorptionsfläche 21 reflektieren. Fig. 2 zeigt eine Seitenansicht eines linearen Fresnel-Kollektors 1. Planare oder gewölbte, rechteckige Spiegelelemente 11 reflektieren die einfallende Solarstrahlung auf einen rohrförmigen Solarabsorber 2. Der Solarabsorber weist eine Längsausdehnung senkrecht zur Betrachtungsebene auf. Zusätzlich weist die Vorrichtung in Fig. 2 einen sekundären, fokussierenden Streukollektor 3 auf, welcher Streukollektor 3 durch die Spiegelelemente 11 fokussierte, aber den Solarabsorber 2 verfehlende Sonnenstrahlen erneut auf den Solarabsorber 2 fokussiert. Ein Wärmeträgermedium durchströmt den Solarabsorber und transportiert die Wärme zu einem thermodynamischen Kreisprozess, in welchem Kreisprozess aus der Wärme elektrische Energie erzeugt wird. Das Wärmeträgermedium kann dabei direkt als Arbeitsfluid des Kreisprozesses genutzt werden beispielsweise bei überhitztem Wasserdampf als Wärmeträgermedium. Es ist aber auch möglich, unterschiedliche Medien als Wärmeträgermedium für die Wärmeübertragung und als Arbeitsfluid für den Kreisprozess zu verwenden, beispielsweise ein Thermoöl wie beispielsweise Terminol VP-1 von Solutia oder geschmolzene Salze wie beispielsweise Hitec XL von Coastal Chemical als Wärmeträgermedium und Wasserdampf als Arbeitsfluid. In diesem Fall zirkulieren die beiden Medien in getrennten Kreisläufen und die Wärme des Wärmeträgermediums wird über einen Wärmetauscher an das Arbeitsfluid übertragen.

Bei einem Sonnenwärmekraftwerk im Ruhezustand führt eine Aufrechterhaltung der Zirkulation des Wärmeträgermediums zu einer Verkürzung der Zeit, welche Zeit für das Hochfahren des Sonnenwärmekraftwerks benötigt wird, oder zur Vermeidung des Einfrierens des Wärmeträgermediums, im Falle der Verwendung von Flüssigsalzgemischen als Wärmeträgermedium. Die Zirkulation während des Ruhezustandes führt dazu, dass es im Ruhezustand zu Wärmeverlusten aufgrund von Konvektion und Wärmestrahlung bei den Solarabsorbern kommt, welche Wärmeverluste wiederum die Zeit für das Hochfahren und das Risiko des Einfrierens erhöhen.

Eine bekannte Lösung dieses Problems ist die Zufuhr von Wärme aus einer externen Wärmequelle beispielsweise durch eine elektrische Widerstandsheizung oder thermischen Speichern.

Ferner sind aus US 4312324 und US 4913129 Lösungen zur Minimierung von Wärmeverlusten bei Solarabsorber während des Betriebs des Solarabsorbers mit Vorrichtungen, welche Vorrichtungen konvektive Wärmeverluste reduzieren und eine gleichzeitige Bestrahlung der Solarabsorber durch den Solarkollektor ermöglichen.

### DARSTELLUNG DER ERFINDUNG

Aufgabe der vorliegenden Erfindung ist es, einen Solarabsorber für ein Sonnenwärmekraftwerk mit verminderten Wärmeverlusten im Ruhezustand zur Verfügung zu stellen.

Diese Aufgabe wird durch eine Vorrichtung zur Wärmeerzeugung aus Sonnenstrahlung für ein Sonnenwärmekraftwerk mit den Merkmalen des Patentanspruches 1 gelöst. Bevorzugte Ausführungsformen sind Gegenstand der abhängigen Patentansprüche.

Gegenstand der Erfindung ist es, das die Vorrichtung neben einem Solarabsorber einen thermischen Isolator aufweist. Der Isolator ist zwischen einer ersten und einer zweiten Position bewegbar. In der ersten Position gibt der Isolator eine Absorptionsfläche des Solarabsorbers frei so, dass keine auf die Absorptionsfläche gerichtete Sonnenstrahlung durch den Isolator abgedeckt wird so die Sonnenstrahlung ungehindert durch den Isolator auf die Absorptionsfläche trifft. In der zweiten Position deckt der Isolator die Absorptionsfläche ab. Dadurch wird der Wärmeverlust des Solarabsorbers während des Ruhezustandes des Solarabsorbers vermindert.

In einer ersten bevorzugten Ausführungsform weist eine innere Oberfläche des Isolators eine niedrige Absorptionsfähigkeit auf. Die innere Oberfläche ist in der zweiten Position des Isolators der dem Solarabsorber zugewandt. Dies ermöglicht eine geringere Aufnahme von durch Wärmestrahlung emittierter Wärme des Solarabsorbers durch den Isolator und damit eine weitere Verminderung der Wärmeverluste des Solarabsorbers.

In einer weiteren vorteilhaften Ausführungsform weist die innere Oberfläche des Isolators eine hohe Reflektionsfähigkeit auf. Dies ermöglicht die Reflektion von durch den Solarabsorber emittierter Wärmestrahlung zurück auf den Solarabsorber und damit eine weitere Verminderung der Wärmeverluste des Solarabsorbers.

In einer weiteren vorteilhaften Ausführungsform weist der Isolator eine eine niedrige Wärmeleitfähigkeit auf. Dies reduziert einen Wärmetransport von einer dem Absorber zugewandten Fläche des Isolators zu einer mit der Umgebung in Kontakt stehenden Fläche des Isolators und den damit verbundenen konvektiven Wärmeverlusten an der mit der Umgebung in Kontakt stehenden Fläche.

Eine weitere vorteilhafte Ausführungsform weist einen Streukollektor. Der Isolator ist an dem Streukollektor angebracht. Dies ermöglicht eine einfache Konstruktion unter Einbeziehung des Streukollektors.

### KURZE BESCHREIBUNG DER FIGUREN

Nachfolgend wird die Erfindung anhand von Ausführungsbeispielen im Zusammenhang mit den Figuren näher erläutert. Die Figuren zeigen:
- Figur 1: einen Fresnel-Kollektor mit einem turmförmigen Solarabsorber aus dem Stand der Technik;
- Figur 2: einen Fresnel-Kollektor mit einem rohrförmigen Solarabsorber mit einem Streukollektor aus dem Stand der Technik;
- Figur 3: einen turmförmigen Solarabsorber mit einem thermischen Isolator;
- Figur 4: einen rohrförmigen Solarabsorber mit einem Streukollektor und einem einstückigen thermischen Isolator; und
- Figur 5: einen rohrförmigen Solarabsorber mit einem Streukollektor und einem geteiltem thermischen Isolator.

Die in den Zeichnungen verwendeten Bezugszeichen sind in der Bezugszeichenliste zusammengefasst. Grundsätzlich sind gleiche Teile mit denselben Bezugszeichen versehen.

### WEGE ZUR AUSFÜHRUNG DER ERFINDUNG

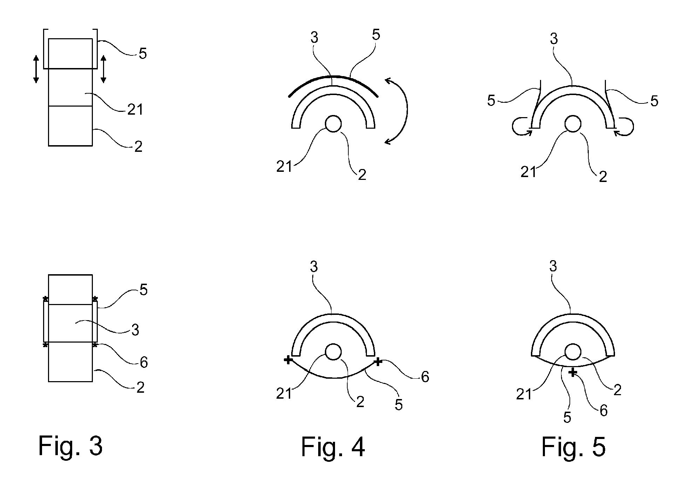

Fig. 3 zeigt einen turmförmigen Solarabsorber 2 mit einem thermischen Isolator 5 in einem Schnitt in axialer Richtung. Der Solarabsorber 2 ist kreiszylinderförmig und weist eine ringförmige Absorptionsfläche 21 auf. Der hohlzylinderförmige thermische Isolator 5, weist einen grösseren Durchmesser auf als der Solarabsorber 2, ist koaxial zum Solarabsorber 2 angeordnet und ist in axialer Richtung durch eine Translationsbewegung verschiebbar. Während des Betriebs des Solarabsorbers 2 ist der Isolator 5 relativ zur Absorptionsfläche 21 axial verschoben. Der Isolator 5 gibt so die Absorptionsfläche 21 des Solarabsorbers 2 für die Absorption von durch einen Solarkollektor 1 konzentrierter Sonnenstrahlung frei, da die Sonnenstrahlung ungehindert auf die Absorptionsfläche 21 auftrifft. Während des Ruhezustandes ist der Isolator 5 konzentrisch um die Absorptionsfläche 21 angeordnet so, dass der Isolator 5 die Absorptionsfläche 21 in radialer und axialer Richtung komplett umschliesst. Der Isolator 5 weist eine geringe Wärmeleitfähigkeit auf. Die innere Mantelfläche des Isolators 5 weist eine niedrige Absorptionsfähigkeit für Wärmestrahlung und eine hohe Reflexionsfähigkeit. An den axialen Enden des Isolators 5 sind Abdichtungen 6 vorhanden, welche Abdichtungen 6 den Luftstrom zwischen der Absorptionsfläche 21 und der Umgebung ausserhalb des durch den Isolator 5 umschlossenen Raums minimieren.

Alternativ sind auch planare Solarabsorber und Absorptionsflächen mit planparallel um die Absorptionsfläche angeordneten Isolatoren möglich.

Fig. 4 zeigt einen rohrförmigen Solarabsorber 2 mit einem Streukollektor 3 in einem Schnitt in radialer Richtung. Der halbhohlzylinderförmige Streukollektor 3 ist koaxial um eine kreiszylinderförmige Absorptionsfläche 21 herum angeordnet. Ein gewölbter, einstückiger, thermischer Isolator 5 ist durch eine Rotationsbewegung in der Schnittebene verschiebbar. Während des Betriebs des Solarabsorbers 2 ist der Isolator 5 auf der der Absorptionsfläche 21 abgewandten Seite des Streukollektors 3 angeordnet so, das der Isolator 5 die Absorptionsfläche 21 des Solarabsorbers 2 für die Absorption freigibt und die Sonnenstrahlung ungehindert auf die Spiegelelemente 11, den Streukollektor und die Absorptionsfläche 21 auftrifft. Während des Ruhezustandes ist der Isolator 5 auf der dem Streukollektor 3 abgewandten Seite der Absorptionsfläche 21 angeordnet. Der Isolator 5 schliesst die Öffnung des halbkreisförmigen Streukollektors 3 verschiesst und so die Absorptionsfläche 21 in radialer und oder axialer Richtung zusammen mit dem Streukollektor 3 komplett umschliesst. An den longitudinalen Enden des Isolators 5 sind Abdichtungen 6 vorhanden, welche Abdichtungen 6 den Luftstrom zwischen der Absorptionsfläche 21 und der Umgebung ausserhalb des durch den Isolator 5 und den Streukollektor 3 umschlossenen Raums minimieren.

Fig. 5 zeigt einen rohrförmigen Solarabsorber 2 mit einem Streukollektor 3 und einem zweiteiligen thermischen Isolator 5 in einem Schnitt in axialer Richtung. Die zwei Teile des Isolators 5 sind je an einem ihrer Enden an einem longitudinalen Ende des Streukollektors 3 drehbar angeordnet. Während des Betriebs des Solarabsorbers 2 sind die Teile des Isolators 5 radial nach aussen gedreht. Der Isolator 5 gibt so die Absorptionsfläche 21 des Solarabsorbers 2 für die Absorption von durch einen Solarkollektor 1 konzentrierter Sonnenstrahlung frei, da die Sonnenstrahlung ungehindert auf die Spiegelelemente 11, den Streukollektor und die Absorptionsfläche 21 auftrifft. Während des Ruhezustandes sind die Teile des Isolators 5 radial nach innen gedreht so, dass die Teile des Isolators 5 die Öffnung des halbkreisförmigen Streukollektors 3 verschiessen und so der Isolator 5 die Absorptionsfläche 21 in radialer und axialer Richtung zusammen mit dem Streukollektor 3 komplett umschliesst. An den freien Enden der Teile des Isolators 5 sind Abdichtungen 6 vorhanden, welche Abdichtungen 6 den Luftstrom zwischen der Absorptionsfläche 21 und der Umgebung ausserhalb des durch den Isolator 5 und den Streukollektor 3 umschlossenen Raums minimieren.

Zusätzlich kann der Streukollektor auf der Aussenseite thermisch isoliert und mit einer Aussenhülle versehen sein. Der Isolator kann auch planar sein. Eine Innenfläche des Isolators 5 mit einer niedrigen Absorptionsfähigkeit für Wärmestrahlung und einer hohen Reflexionsfähigkeit ist für alle Ausführungsformen verwendbar. Es sind andere Formen und Unterteilungen des Isolators 5 möglich. Der Isolator 5 kann steif oder flexibel sein. Es ist auch möglich, dass der Isolator 5 nur einen Teil der Absorptionsfläche 21 in radialer und oder axialer Richtung umschliesst. Die Positionen der Abdichtungen 6 können variiert werden. Es sind auch abdichtungsfreie Varianten möglich. Im Falle eines vorhandenen Streukollektors 3 ist es nicht zwingend, dass Isolator 5 zusammen mit dem Streukollektor 3 die Absorptionsfläche 21 komplett umschliesst. Das Umschliessen kann auch vollständig durch den Isolator 5 geschehen, beispielsweise durch einen mehrteiligen Isolator 5.

### BEZUGSZEICHENLISTE

- 1: Solarkollektor
- 11: Spiegelelement
- 2: Solarabsorber
- 21: Absorptionsfläche
- 3: Streukollektor
- 5: thermischer Isolator
- 6: Abdichtung

## Patentansprüche

1. Vorrichtung zur Wärmeerzeugung aus Sonnenstrahlung für ein Sonnenwärmekraftwerk, welches Sonnenwärmekraftwerk einen Solarkollektor (1) zur Konzentration der Sonnenstrahlung, einen Solarabsorber (2) zur Wärmeerzeugung durch Absorption der konzentrierten Sonnenstrahlung und ein Wärmeträgermedium zum Abtransport der im Solarabsorber (2) erzeugten Wärme aufweist, wobei die Vorrichtung den Solarabsorber (2) und einen thermischen Isolator (5) zur Verringerung der Wärmeverluste des Solarabsorbers (2) aufweist, **dadurch gekennzeichnet, dass** der thermische Isolator (5) zwischen einer ersten Position, in welcher ersten Position der thermische Isolator (5) eine Absorptionsfläche (21) des Solarabsorbers (2) zur Absorption von durch den Solarkollektor (1) konzentrierter Sonnenstrahlung freigibt, und einer zweiten Position, in welcher zweiten Position der thermische Isolator (5) die Absorptionsfläche (21) des Solarabsorbers (2) abdeckt, bewegbar ist.

2. Vorrichtung nach Anspruch 1, **dadurch gekennzeichnet, dass** die Absorptionsfläche (21) die gesamte Absorptionsfläche des Solarabsorbers (2) ist.

3. Vorrichtung nach Anspruch 1 oder 2, **dadurch gekennzeichnet, dass** der thermische Isolator (5) durch eine Translationsbewegung und/oder eine Rotationsbewegung bewegbar ist.

4. Vorrichtung nach einem der Ansprüche 1 bis 3, wobei der thermische Isolator (5) eine innere Oberfläche aufweist, **dadurch gekennzeichnet, dass** die innere Oberfläche dem Solarabsorber (2) in der zweiten Position zugewandt ist und eine niedrige Absorptionsfähigkeit für Wärmestrahlung aufweist.

5. Vorrichtung nach einem der Ansprüche 1 bis 4, **dadurch gekennzeichnet, dass** die innere Oberfläche des thermischen Isolators (5) eine hohe Reflexionsfähigkeit aufweist.

6. Vorrichtung nach einem der Ansprüche 1 bis 5, **dadurch gekennzeichnet, dass** der thermische Isolators (5) eine niedrige Wärmeleitfähigkeit aufweist.

7. Vorrichtung nach einem der Ansprüche 1 bis 6, **dadurch gekennzeichnet, dass** der thermische Isolator (5) eine Abdichtung (6) aufweist, welche Abdichtung (6) einen Luftstrom zwischen dem Solarabsorber (2) und der Umgebung in der zweiten Position minimiert.

8. Vorrichtung nach einem der Ansprüche 1 bis 7, **dadurch gekennzeichnet, dass** der thermische Isolator (5) so beschaffen ist, dass der thermische Isolator (5) in der ersten Position einen minimalen Schatten bezüglich der direkten und konzentrierten Sonnenstrahlung auf den Solarkollektor (1) oder den Solarabsorber (2) wirft.

9. Vorrichtung nach einem der Ansprüche 1 bis 8, wobei die Vorrichtung einen Streukollektor (3) aufweist, welcher Streukollektor (3) sich auf der dem Solarkollektor (1) gegenüberliegenden Seite des Solarabsorbers (2) befindet, um Streusonnenstrahlung, welche Streusonnenstrahlung durch den Solarkollektor (1) in Richtung des Solarabsorbers (2) konzentriert wird und nicht auf den Solarabsorber (2) trifft auf den Solarabsorber (2) zu reflektieren, **dadurch gekennzeichnet, dass** der thermische Isolator (5) an dem Streukollektor (3) oder einer äusseren Hülle eines thermisch isolierten Streukollektors (3) befestigt ist.

10. Thermischer Isolator geeignet für eine Vorrichtung gemäss einem der Ansprüche 1 bis 9.

11. Sonnenwärmekraftwerk, **dadurch gekennzeichnet, dass** das Sonnenwärmekraftwerk eine Vorrichtung gemäss einem der Ansprüche 1 bis 9 aufweist.
